(19)

Europäisches
Patentamt
European
Patent Office
Office européen
des brevets

(11) **EP 4 432 095 A1**

(12) **EUROPEAN PATENT APPLICATION**
published in accordance with Art. 153(4) EPC

(43) Date of publication:
**18.09.2024 Bulletin 2024/38**

(21) Application number: **22903113.3**

(22) Date of filing: **08.11.2022**

(51) International Patent Classification (IPC):
***G06F 11/36*** (2006.01)

(52) Cooperative Patent Classification (CPC):
**G06F 11/36**

(86) International application number:
**PCT/CN2022/130675**

(87) International publication number:
**WO 2023/103690 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.12.2021 CN 202111493927**

(71) Applicant: **Huawei Cloud Computing
Technologies Co., Ltd.
Guiyang, Guizhou 550025 (CN)**

(72) Inventors:
• **YANG, Chenhua
  Guiyang, Guizhou 550025 (CN)**
• **LIANG, Guangtai
  Guiyang, Guizhou 550025 (CN)**

(74) Representative: **Maiwald GmbH
Engineering
Elisenhof
Elisenstrasse 3
80335 München (DE)**

(54) **UNIT TESTING GENERATION METHOD AND APPARATUS, AND RELATED DEVICE**

(57) This application provides a unit testing generation method and apparatus, and a related device. The method includes: first, determining a type of a refactoring operation performed by a user on source code; and then determining, by a unit testing generation module based on the type of the refactoring operation, the source code, and refactored code, unit testing corresponding to the refactored code, where the refactored code is code obtained by performing the refactoring operation on the source code by the user, and the unit testing corresponding to the refactored code is used to test the refactored code. The method can improve efficiency of obtaining the unit testing corresponding to the refactored code and efficiency of software development and maintenance.

```
┌──────────────────────────────────────────────┐
│ Monitor, in real time, a refactoring operation performed by │─ S301
│ a user on source code                          │
└──────────────────────────────────────────────┘
                      │
                ┌─────────────┐  S302
          Determine whether
       a code refactoring tool is used for the              No
     refactoring operation performed by the user on
             the source code
                └─────────────┘
        │ Yes            S303              S304
┌────────────────────────┐    ┌────────────────────────┐
│ Determine a type of the │    │ Obtain refactored code, and determine │
│ refactoring operation based on │    │ a type of the refactoring operation │
│ the code refactoring tool used │    │ based on the refactored code │
│ by the user │    │ │
└────────────────────────┘    └────────────────────────┘
        │                              │
┌──────────────────────────────────────────┐
│ A unit testing generation module determines, based on the │─ S305
│ type of the refactoring operation, the source code, and the │
│ refactored code, unit testing corresponding to the refactored │
│ code │
└──────────────────────────────────────────┘

                      FIG. 3
```

## Description

This application claims priority to Chinese Patent Application No. 202111493927.X, filed with the China National Intellectual Property Administration on December 8, 2021 and entitled "UNIT TESTING GENERATION METHOD AND APPARATUS, AND RELATED DEVICE", which is incorporated herein by reference in its entirety.

## TECHNICAL FIELD

This application relates to the field of computer technologies, and in particular, to a unit testing generation method and apparatus, and a related device.

## BACKGROUND

Unit testing (unit testing) is a short section of code used to check whether a function of a smallest testable unit in software (a smallest testable unit in C language is a function, a smallest testable unit in Java is a class, and a smallest testable unit in graphical software is a window or a menu) is correct, and plays an important role in ensuring software quality.

In a software development and maintenance process, a developer usually performs code refactoring (code refactoring). This operation usually breaks consistency between code and unit testing corresponding to the code. In other words, if unit testing corresponding to source code (that is, code that is not refactored) is used to test refactored code (that is, code obtained through refactoring), a test result is inaccurate, test coverage is incomplete, or even testing cannot be performed usually.

To avoid the foregoing case, after performing code refactoring, the developer needs to manually modify the unit testing corresponding to the source code to obtain unit testing corresponding to the refactored code, or rewrite the unit testing corresponding to the refactored code. It can be learned that the foregoing operation consumes a lot of energy and time of the developer, and results in low efficiency of obtaining the unit testing corresponding to the refactored code, resulting in low efficiency of software development and maintenance.

## SUMMARY

This application provides a unit testing generation method and apparatus, and a related device, to save energy and time of a developer, and improve efficiency of obtaining unit testing corresponding to refactored code, so as to improve efficiency of software development and maintenance.

According to a first aspect, a unit testing generation method is provided. The method includes: first, determining a type of a refactoring operation performed by a user on source code; and then determining, by a unit testing generation module based on the type of the refactoring operation, the source code, and refactored code, unit testing corresponding to the refactored code, where the refactored code is code obtained by performing the refactoring operation on the source code by the user, and the unit testing corresponding to the refactored code is used to test the refactored code.

It can be learned from the foregoing solution that, in this application, when the user performs the refactoring operation on the source code, the type of the refactoring operation performed by the user on the source code may be determined. Then the unit testing corresponding to the refactored code can be determined by the unit testing generation module based on the type of the refactoring operation, the source code, and the refactored code. The user does not need to manually modify unit testing corresponding to the source code to obtain the unit testing corresponding to the refactored code, or rewrite the unit testing corresponding to the refactored code, to save energy and time of a developer, and improve efficiency of obtaining the unit testing corresponding to the refactored code and efficiency of software development and maintenance.

In a possible implementation, the determining a type of a refactoring operation performed by a user on source code may be specifically implemented in the following manner: determining whether a code refactoring tool is used for the refactoring operation performed by the user on the source code; and if it is determined that the code refactoring tool is used, determining the type of the refactoring operation based on the code refactoring tool; or if it is determined that the code refactoring tool is not used, determining the type of the refactoring operation based on the refactored code.

In the foregoing implementation, whether the code refactoring tool is used when the user performs the refactoring operation on the source code may be automatically monitored, and then a corresponding manner is automatically selected based on a determining result, to determine the type of the refactoring operation, so that the unit testing corresponding to the refactored code can be subsequently determined based on the type of the refactoring operation, the source code, and the refactored code. The user does not need to manually determine the type of the refactoring operation, so that efficiency of obtaining the unit testing corresponding to the refactored code and efficiency of software development and maintenance can be improved.

In a possible implementation, when it is determined that the user uses the code refactoring tool, the type of the refactoring operation is determined based on the refactored code.

In a possible implementation, the determining the type of the refactoring operation based on the refactored code may be specifically implemented in the following manner: first, obtaining the refactored code; then determining whether a rule matching the refactored code exists in a first rule library; and if it is determined that the rule matching the refactored code exists, using a refactoring operation type corresponding to the matched rule as the type of the refactoring operation.

The first rule library includes a plurality of first rules, and the plurality of first rules correspond to a plurality of refactoring operation types. Specifically, a correspondence between the plurality of first rules and the plurality of refactoring operation types may be a one-to-one correspondence. Because of the one-to-one correspondence between the plurality of first rules and the plurality of refactoring operation types, the determining whether a rule matching the refactored code exists in a first rule library may be understood as determining whether a refactoring operation type matching the refactored code exists in the plurality of refactoring operation types. When it is determined that the matching refactoring operation type exists, the refactoring operation type is determined as the type of the refactoring operation performed by the user on the source code.

During specific implementation, a first matching degree threshold, for example, 100%, may be set. When a rule whose matching degree is 100% with the refactored code exists in the first rule library, it is determined that the rule matching the refactored code exists. When the rule whose matching degree is 100% with the refactored code exists in the first rule library, it is determined that the rule matching the refactored code does not exist. Optionally, when a rule whose matching degree with the refactored code is greater than the first matching degree threshold (for example, 90%) exists in the first rule library, it may be determined that the rule matching the refactored code exists in the first rule library; or otherwise, it is determined that the rule matching the refactored code does not exist in the first rule library. If the matched rule exists and there are a plurality of matched rules, a refactoring operation type corresponding to a rule with a maximum matching degree may be determined as the type of the refactoring operation performed by the user on the source code. Optionally, the plurality of matched rules may be sorted based on rule matching degrees, and then the plurality of sorted rules are recommended to the user together. The user selects a rule that meets a testing requirement from the plurality of sorted rules, and finally determines a refactoring operation type corresponding to the rule as the type of the refactoring operation performed by the user on the source code. Optionally, refactoring operation types corresponding to the plurality of matched rules may be sorted based on rule matching degrees, and then the sorted refactoring operation types are recommended to the user together. The user selects a refactoring operation type that meets a testing requirement from the sorted refactoring operation types, and determines the refactoring operation type as the type of the refactoring operation performed by the user on the source code.

During specific implementation, the plurality of second rules and unit testing corresponding to the plurality of second rules are obtained in advance by a dedicated rule designer based on a plurality of application scenarios.

In the foregoing implementation, the refactoring operation type corresponding to the rule matching the refactored code in the first rule library is determined as the type of the refactoring operation. Because the plurality of first rules and the refactoring operation types corresponding to the plurality of first rules may be obtained in advance by the dedicated rule designer based on the plurality of application scenarios, accuracy of the determined type of the refactoring operation can be ensured. In addition, the foregoing implementation provides a plurality of manners of determining the type of the refactoring operation, so that flexibility is high, and user experience can be improved.

In a possible implementation, the determining the type of the refactoring operation based on the refactored code may be specifically implemented in the following manner: first, obtaining the refactored code; and then inputting the refactored code into a refactoring operation identification model for identification, to obtain the type of the refactoring operation.

During specific implementation, the refactoring operation identification model may be a model with high identification precision that is obtained through training by using a first sample set including a large quantity of known refactored code. The large quantity of known refactored code in the first sample set may be obtained by the user by separately performing a refactoring operation on a large quantity of known source code, or may be obtained from the Internet. This is not specifically limited herein.

During specific implementation, after the refactored code is input into the refactoring operation identification model, the refactoring operation identification model may obtain a plurality of refactoring operation types and confidence of the plurality of refactoring operation types. The refactoring operation identification model may directly use an operation type with maximum confidence in the plurality of refactoring operation types as the type of the refactoring operation performed by the user on the source code for output. Optionally, the refactoring operation identification model may sort, based on confidence, a part of refactoring operation types whose confidence is greater than a confidence threshold in the plurality of refactoring operation types for output, and recommend the sorted refactoring operation types to the user. Subsequently, the user may select, from the part of refactoring operation types, a refactoring operation type that meets a testing requirement as the type of the refactoring operation performed by the user on the source code.

In the foregoing implementation, the refactored code is input into the refactoring operation identification model for identification, and output of the refactoring operation identification model is used as the type of the refactoring operation. Because the refactoring operation identification model has high identification precision, accuracy of the determined type of the refactoring operation can be ensured.

In a possible implementation, the unit testing generation module may specifically determine, based on the type of the refactoring operation, the source code, and the refactored code, the unit testing corresponding to the refactored code in the following manner: first, obtaining a difference between the refactored code and the source code; and then determining, based on the type of the refactoring operation and the difference between the refactored code and the source code, the unit testing corresponding to the refactored code.

In a possible implementation, the unit testing generation module may specifically generate, based on the type of the refactoring operation and the difference between the refactored code and the source code, the unit testing corresponding to the refactored code in the following manner: first, determining whether a rule matching the type of the refactoring operation and the difference between the refactored code and the source code exists in a second rule library; and if the unit testing generation module determines that the rule matching the type of the refactoring operation and the difference between the refactored code and the source code exists, using unit testing corresponding to the matched rule as the unit testing corresponding to the refactored code.

The second rule library includes a plurality of second rules, and the plurality of second rules correspond to a plurality of types of unit testing. Specifically, a correspondence between the plurality of second rules and the plurality of types of unit testing may be a one-to-one correspondence. Because of the one-to-one correspondence between the plurality of second rules and the plurality of types of unit testing, the determining whether a rule matching the type of the refactoring operation and the difference between the refactored code and the source code exists in a second rule library may be understood as determining whether unit testing matching the type of the refactoring operation and the difference between the refactored code and the source code exists in the plurality of types of unit testing. When it is determined that the matching unit testing exists, the unit testing is determined as the unit testing corresponding to the refactored code.

During specific implementation, a second matching degree threshold (for example, 100%) may be set. When a rule whose matching degree is 100% with the type of the refactoring operation and the difference between the refactored code and the source code exists in the second rule library, it is determined that the rule matching the type of the refactoring operation and the difference between the refactored code and the source code exists. When the rule whose matching degree is 100% with the type of the refactoring operation and the difference between the refactored code and the source code does not exist in the second rule library, it is determined that the matched rule does not exist. Optionally, when a rule whose matching degree with the type of the refactoring operation and the difference between the refactored code and the source code is greater than the second matching degree threshold (for example, 90%) exists in the second rule library, it may be determined that the matched rule exists in the second rule library; or otherwise, it is determined that the matched rule does not exist in the second rule library. If the matched rule exists and there are a plurality of matched rules, unit testing corresponding to a rule with a maximum matching degree may be determined as the unit testing corresponding to the refactored code. Optionally, the plurality of matched rules may be sorted based on rule matching degrees, and then the plurality of sorted rules are recommended to the user together. The user selects a rule that meets a testing requirement from the plurality of sorted rules, and finally determines unit testing corresponding to the rule as the unit testing corresponding to the refactored code. Optionally, unit testing corresponding to the plurality of matched rules may be sorted based on rule matching degrees, and then the sorted unit testing is recommended to the user together. The user selects unit testing that meets a testing requirement from the sorted unit testing, and determines the unit testing as the unit testing corresponding to the refactored code.

The plurality of second rules and the unit testing corresponding to the plurality of second rules may be obtained in advance by a dedicated rule designer based on a plurality of application scenarios.

In the foregoing implementation, the unit testing corresponding to the rule matching the type of the refactoring operation and the difference between the refactored code and the source code in the second rule library is determined as the unit testing corresponding to the refactored code. Because the plurality of second rules and the unit testing corresponding to the plurality of second rules may be obtained in advance by the dedicated rule designer based on the plurality of application scenarios, accuracy of the determined unit testing corresponding to the refactored code can be ensured. In addition, the foregoing implementation provides a plurality of manners of determining the unit testing corresponding to the refactored code, so that flexibility is high, and user experience can be improved.

In a possible implementation, if the unit testing generation module determines that the rule matching the type of the refactoring operation and the difference between the refactored code and the source code does not exist, the unit testing generation module inputs the difference between the refactored code and the source code into a unit testing generation model, to obtain the unit testing corresponding to the refactored code.

During specific implementation, the unit testing generation model may be obtained through training by using a second sample set including differences between a large quantity of known refactored code and a large quantity of known source code. The difference between each piece of known refactored code and known source code corresponding to the known refactored code in the second sample set may be obtained by the user by analyzing, after the user obtains the known refactored code by performing a refactoring operation on the known source code, the known refactored code and the known source code, or may be obtained from the Internet. This is not specifically limited herein.

During specific implementation, after the difference between the refactored code and the source code is input into the unit testing generation model, the unit testing generation model may obtain a plurality of types of unit testing and confidence of the plurality of types of unit testing. The unit testing generation model may directly use unit testing with maximum confidence in the plurality of types of unit testing as the unit testing corresponding to the refactored code to output. Optionally, the unit testing generation model may sort, based on confidence, a part of unit testing whose confidence is greater than a confidence threshold in the plurality of types of unit testing for output, and recommend the sorted unit testing to the user. Subsequently, the user may select, from the part of unit testing, unit testing that meets a testing requirement as the unit testing corresponding to the refactored code.

In the foregoing implementation, the difference between the refactored code and the source code is input into the unit testing generation model for identification, and output of the unit testing generation model is used as the unit testing corresponding to the refactored code. Because the unit testing generation model has high identification precision, accuracy of the determined unit testing corresponding to the refactored code can be ensured.

In a possible implementation, before the determining a type of a refactoring operation performed by a user on source code, a time range entered by the user is received; and the determining a type of a refactoring operation performed by a user on source code includes: determining a type of the refactoring operation performed by the user on the source code within the time range.

In the foregoing implementation, a type of the refactoring operation performed by the user on the source code can be determined only within a time range expected by the user, and then unit testing corresponding to the refactored code is generated based on the type of the refactoring operation. In this way, user experience can be optimized, and computing resources can be saved.

According to a second aspect, a unit testing generation apparatus is provided. The apparatus includes: a refactoring type determining module, configured to determine a type of a refactoring operation performed by a user on source code; and a unit testing generation module, configured to determine, based on the type of the refactoring operation, the source code, and refactored code, unit testing corresponding to the refactored code, where the refactored code is code obtained by performing the refactoring operation on the source code by the user, and the unit testing corresponding to the refactored code is used to test the refactored code.

In a possible implementation, the refactoring type determining module may specifically determine, in the following manner, the type of the refactoring operation performed by the user on the source code: determining whether a code refactoring tool is used for the refactoring operation performed by the user on the source code; and if it is determined that the code refactoring tool is used, determining the type of the refactoring operation based on the code refactoring tool; or if it is determined that the code refactoring tool is not used, determining the type of the refactoring operation based on the refactored code.

In a possible implementation, the refactoring type determining module may specifically determine the type of the refactoring operation based on the refactored code in the following manner: first, obtaining the refactored code; then determining whether a rule matching the refactored code exists in a first rule library; and if it is determined that the rule matching the refactored code exists, using a refactoring operation type corresponding to the matched rule as the type of the refactoring operation.

In a possible implementation, the refactoring type determining module may specifically determine the type of the refactoring operation based on the refactored code in the following manner: first, obtaining the refactored code; and then inputting the refactored code into a refactoring operation identification model for identification, to obtain the type of the refactoring operation.

In a possible implementation, the unit testing generation module may specifically determine, based on the type of the refactoring operation, the source code, and refactored code, unit testing corresponding to the refactored code in the following manner: first, obtaining a difference between the refactored code and the source code; and then determining, based on the type of the refactoring operation and the difference between the refactored code and the source code, the unit testing corresponding to the refactored code.

In a possible implementation, the unit testing generation module may specifically determine, based on the type of the refactoring operation and the difference between the refactored code and the source code, the unit testing corresponding to the refactored code in the following manner: determining whether a rule matching the type of the refactoring operation and the difference between the refactored code and the source code exists in a second rule library; and if it is determined that the rule matching the type of the refactoring operation and the difference between the refactored code and the source code exists, using unit testing corresponding to the matched rule as the unit testing corresponding to the refactored code.

In a possible implementation, the unit testing generation module is further configured to: if it is determined that the rule matching the type of the refactoring operation and the difference between the refactored code and the source code does not exist, input the difference between the refactored code and the source code into a unit testing generation model, to obtain the unit testing corresponding to the refactored code.

According to a third aspect, a computer-readable storage medium is provided. The computer-readable storage medium stores instructions, and the instructions are used to implement the method provided in any one of the first aspect or the possible implementations of the first aspect.

According to a fourth aspect, a computing device is provided. The computing device includes a processor and a memory, and the processor is configured to execute instructions stored in the memory, to enable the computing device to implement the method provided in any one of the first aspect or the possible implementations of the first aspect.

According to a fifth aspect, a computer program product is provided. The computer program product includes a computer program. When the computer program is read and executed by a computing device, the computing device is enabled to perform the method provided in any one of the first aspect or the possible implementations of the first aspect.

BRIEF DESCRIPTION OF DRAWINGS

FIG. 1 is a schematic diagram of an application scenario according to this application;
FIG. 2 is a schematic diagram of another application scenario according to this application;
FIG. 3 is a schematic flowchart of a unit testing generation method according to this application;
FIG. 4 is a schematic diagram of a code refactoring tool according to this application;
FIG. 5 is a schematic flowchart of determining, by a unit testing generation module, unit testing corresponding to refactored code according to this application;
FIG. 6 is a display interface of a sorting result according to this application;
FIG. 7 is a schematic diagram of a structure of a unit testing generation apparatus according to this application; and
FIG. 8 is a schematic diagram of a structure of a computing device according to this application.

**DESCRIPTION OF EMBODIMENTS**

The following describes technical solutions provided in this application with reference to the accompanying drawings.

To make the technical solutions provided in this application clearer, before the technical solutions provided in this application are specifically described, related terms are first explained.

(1) Unit testing is a short section of code used to check whether a function of a smallest testable unit in software is correct. Usually, one type of unit testing is used to check whether behavior of a section of code in a specific condition (which may also be referred to as a specific scenario) is consistent with a user expectation. Content of the unit testing usually includes a test objective, a test environment, input data, a test procedure, an expected result, a test script, and the like. A final document formed is usually written by a software developer. A software tester can determine, based on the unit testing, whether a software product works correctly.

(2) Code refactoring is an operation of making any modification to code to improve code readability or simplify a code structure without affecting a code output result. In other words, refactoring a section of code does not change external performance (which may also be referred to as a function) of the code, but changes only a structure of the code (where for example, a character in the code is replaced or a redundant character is deleted). The refactoring operation specifically includes an extract method (extract method) (which may also be referred to as an extract function), a move method (move method) (which may also be referred to as a move function), extract class (extract class), extract subclass (extract subclass), extract superclass (extract superclass), move field (move field), inline class (inline class), delete class (delete class), encapsulate field (encapsulate field), and the like.

(3) A code refactoring tool is a function of an application that has a program development function (for example, a code editor, an integrated development environment (integrated development environment, IDE), or a cloud service web page (web) frontend) to assist a user in code refactoring, for example, an extract method function of an eclipse application, and the user can perform a refactoring operation of the "extract method" on code through the function.

(4) The IDE is an application program configured to provide a program development environment, usually includes tools such as a code editor, a compiler, a debugger, and a graphical user interface, and provides an integrated development software service that integrates a code writing function, an analysis function, a compilation function, a debugging function, and the like. All software with this characteristic may be referred to as the IDE, for example, a visual studio series and a delphi series.

(5) A neural network (neural network) may include a neural unit (also referred to as a neuron). The neural unit may be an operation unit that uses a variable $x_s$ and an intercept b as input. Output of the operation unit may be:

$$h_{W,b}(x) = f\left(W^T x\right) = f\left(\sum_{s=1}^{n} W_s x_s + b\right)$$

$s=1, 2, ..., $ or $n$, $n$ is a natural number greater than 1, $W_s$ is a weight of $x_s$, and $b$ is a bias of the neural unit. $f$ is an activation function (activation function) of the neural unit, and is used to introduce a nonlinear characteristic into the neural network, to convert an input signal in the neural unit to an output signal. The output signal of the activation function may be used as input of a next convolution layer. The activation function may be a sigmoid function or another function. This is not limited herein. The neural network is a network formed by connecting many single neural units together. To be specific, output of one neural unit may be input of another neural unit. Input of each neural unit may be connected to a local receptive field of a previous layer to extract a feature of the local receptive field. The local receptive field may be a region including several neural units. There are various neural networks. Common neural networks include a random forest (random forest), a support vector machine (support vector machine, SVM), a graph neural network (graph neural network, GNN), a convolutional neural network (convolutional neural network, CNN), and the like.

(6) Model training is a process of training a neural network to obtain a trained model that can be used to complete a specific task. Training a neural network refers to using existing data to make a neural network fit a rule of the existing data through a specific method, to determine a parameter in the neural network. A dataset needs to be used to train a neural network. Depending on whether data in the dataset has a label (that is, whether the data has a specific type or name), neural network training may be classified into supervised training and unsupervised training. When supervised training is performed on the neural network, the data in the dataset used for training has a label. During neural network training, the data in the dataset is used as input of the neural network, the label corresponding to the data is used as a reference for an output value of the neural network, a loss (loss) value between the output value of the neural network and the label corresponding to the data is calculated by using a loss function (loss function), and a parameter in the neural network is adjusted based on the loss value, until the neural network can accurately output, based on the input data, an output value that is the same as the label corresponding to the data. When unsupervised training is performed on the neural network, the data in the dataset used for training does not have a label. During neural network training, the data in the dataset is input into the neural network at a time, and the neural network gradually learns an association and a potential rule between the data, until the neural network can be used to determine or identify a type or a feature of the input data.

(7) The loss function (loss function) may also be referred to as an objective function (objective function), and is a function used to measure a degree to which a model is trained (that is, used to calculate a difference between a value predicted by the model and a real target value). In a process of training a model, it is expected that output of the model is as close as possible to a value that is actually expected to be predicted. Therefore, a predicted value of the current model and a target value that is actually expected may be compared, and then a weight vector of each layer of a neural network in the model may be updated based on a difference between the predicted value of the current model and the target value that is actually expected (where certainly, an initialization process is usually performed before a first update, that is, a parameter is preconfigured for each layer in the model). For example, if the predicted value of the model is high, the weight vector is adjusted to lower the predicted value, and adjustment is continuously performed, until the model can predict the target value that is actually expected or a value very close to the target value that is actually expected. In this case, the model training is considered complete.

The following briefly describes an application scenario in embodiments of this application.

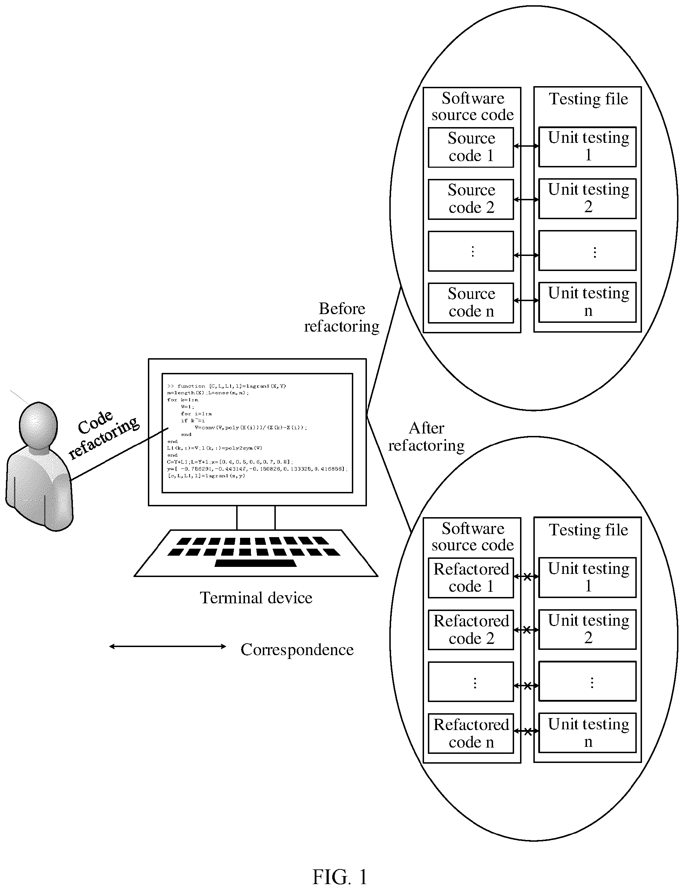

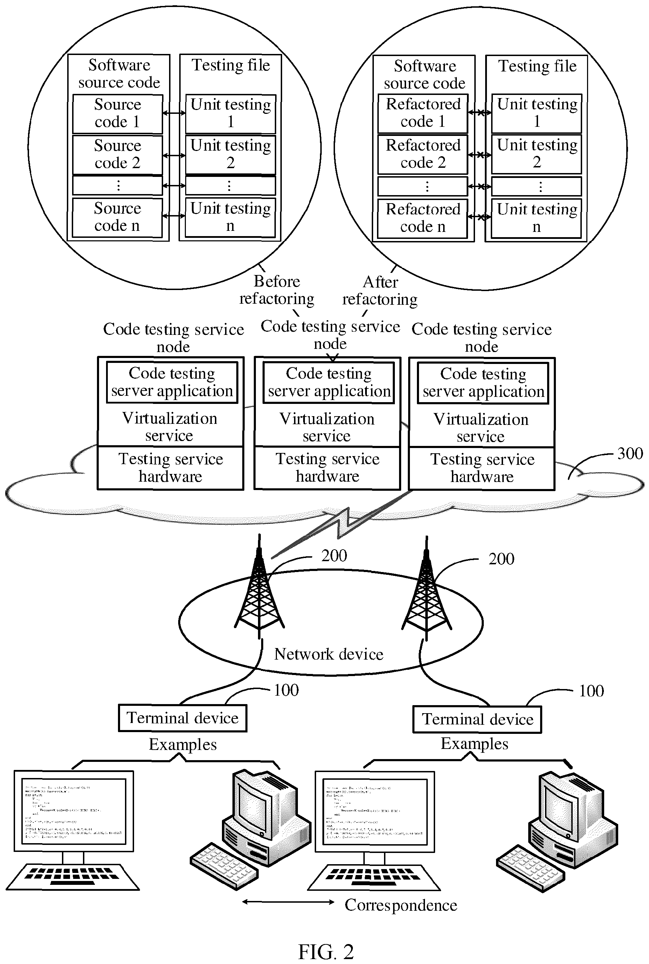

FIG. 1 and FIG. 2 are schematic diagrams of two application scenarios shown as examples in this application. The application scenario shown in FIG. 1 specifically corresponds to a scenario in which a developer develops or maintains software through an independent terminal device. The application scenario shown in FIG. 2 specifically corresponds to a scenario in which a developer develops or maintains software through a software development system.

In the application scenario shown in FIG. 1, the terminal device may be any device having a program development function, for example, a personal computer or a notebook computer. The program development function of the terminal device may be implemented by a program development application (for example, a code editor) of the terminal device, or may be implemented by a program development application (for example, eclipse or visual studio) developed by a third party and installed on the terminal device. This is not specifically limited herein. The developer may develop or maintain the software by using the program development function on the terminal device. During software development or maintenance, the developer usually needs to test whether a function of developed or maintained code is correct. Therefore, the terminal device usually pre-stores a large quantity of testing files corresponding to a large quantity of software source code, and records a correspondence between the large quantity of software source code and the large quantity of testing files. Usually, the correspondence is a one-to-one correspondence. As shown in FIG. 1, source code 1 corresponds to unit testing 1, source code 2 corresponds to unit testing 2, ..., and source code n corresponds to unit testing n, where each type of unit testing is used to test whether a function of source code corresponding to the unit testing is correct.

In the application scenario shown in FIG. 2, the software development system includes a terminal device 100, a network device 200, and a server 300.

The terminal device 100 may be any device having a program development function, for example, a personal computer or a notebook computer. A program development function of the terminal device 100 may be implemented by a program development application (for example, a code editor) of the terminal device 100, or may be implemented by a program development application (for example, eclipse or visual studio) developed by a third party and installed on the terminal device 100. This is not specifically limited herein. The developer may develop or maintain the software by using the program development function on the terminal device 100.

The network device 200 is configured to transmit data between the terminal device 100 and the server 300 through a communication network of any communication mechanism/communication standard. The communication network may be in a form of a wide area network, a local area network, a point-to-point connection, or any combination thereof.

The server 300 may be a server that provides a code testing service. The server 300 may be a personal computer, or may be a cloud-based server. In FIG. 1, an example in which a server 300 is a cloud-based server is used. The server 300 includes a plurality of code testing service nodes, and each code testing service node includes testing service hardware, a virtualization service, and a code testing server application.

The testing service hardware includes a computing resource, a storage resource, and a network resource. The computing resource may use a heterogeneous computing architecture, for example, may use a central processing unit (central processing unit, CPU) + graphics processing unit (graphics processing unit, GPU) architecture, a CPU + AI chip architecture, or a CPU + GPU + AI chip architecture. This is not specifically limited herein. The storage resource may include a memory or the like. Herein, the computing resource may be divided into a plurality of computing unit resources, the storage resource may be divided into a plurality of storage unit resources, and the network resource may be divided into a plurality of network unit resources. Therefore, an image processing platform may perform free combination on unit resources based on a resource requirement of a user, to provide a resource based on a requirement of the user. For example, the computing resource may be divided into 5u computing unit resources, and the storage resource may be divided into 10G storage unit resources. In this case, combinations of computing resources and storage resources may be 5u+10G, 5u+20G, 5u+30u, ..., 10u+10G, 10u+20G, 10u+30u, ....

The virtualization service is a service of pooling resources of a plurality of physical hosts to form a unified resource pool by using a virtualization technology, and flexibly isolating mutually independent resources based on a requirement of a user to run an application program of the user. The virtualization service may include a virtual machine (virtual machine, VM) service, a bare metal server (bare metal server, BMS) service, and a container (container) service. The VM service may be a service of virtualizing a virtual machine (virtual machine, VM) resource pool on a plurality of physical hosts by using the virtualization technology, to provide a VM for the user on demand. The BMS service is a service of virtualizing a BMS resource pool on a plurality of physical hosts to provide a BMS for the user on demand. The container service is a service of virtualizing a container resource pool on a plurality of physical hosts to provide a container for the user on demand. The VM is a simulated virtual computer, that is, a computer in a logical sense. The BMS is an elastically scalable high-performance computing service, has computing performance the same as that of a conventional physical machine and has a feature of secure physical isolation. The container is a kernel virtualization technology that provides lightweight virtualization to isolate user space, processes, and resources. It should be understood that the VM service, the BMS service, and the container service in the virtualization service are merely used as specific examples. During actual application, the virtualization service may alternatively be another lightweight or heavyweight virtualization service. This is not specifically limited herein.

The code testing service node may pre-store a large quantity of testing files corresponding to a large quantity of software source code, and record a correspondence between the large quantity of software source code and the large quantity of testing files. Usually, the correspondence is a one-to-one correspondence. As shown in FIG. 2, source code 1 corresponds to unit testing 1, source code 2 corresponds to unit testing 2, ..., and source code n corresponds to unit testing n, where each type of unit testing is used to test whether a function of source code corresponding to the unit testing is correct.

The code testing server application may be configured to find, based on an identifier of source code entered by the user, unit testing corresponding to the source code from the large quantity of testing files, and then return the found unit testing to the terminal device 100, so that the developer can test a function of the source code by using the unit testing.

It should be understood that the software development system shown in FIG. 2 is merely used as a specific example. During actual application, the software development system may include any quantity of terminal devices 100, any quantity of network devices 200, and any quantity of servers 300. This is not specifically limited herein.

In a process in which the developer uses the terminal device shown in FIG. 1 or the software development system shown in FIG. 2 to develop or maintain software, the developer usually refactors software source code. Although the operation is merely to change a structure of the source code, without affecting external performance of the source code, the operation usually breaks consistency between the source code and unit testing corresponding to the source code. As shown in FIG. 1 or FIG. 2, when the unit testing corresponding to the source code is used to test refactored code (that is, code obtained through refactoring), various problems such as an inaccurate test result or incomplete test coverage occur.

To avoid the foregoing problems, during code refactoring, the developer usually needs to modify the unit testing corresponding to the source code or rewrite new unit testing, to obtain unit testing used to test the refactored code. However, this consumes a lot of energy and time of the developer, resulting in low efficiency of obtaining the unit testing corresponding to the refactored code and low efficiency of software development and maintenance.

To resolve the foregoing problems, this application provides a unit testing generation method and apparatus, and a related device. When a user performs a refactoring operation on source code, a type of the refactoring operation performed by the user on the source code can be determined. Then unit testing corresponding to refactored code is determined based on the determined type of the refactoring operation, the source code, and the refactored code. A developer does not need to manually modify unit testing corresponding to the source code to obtain the unit testing corresponding to the refactored code, or rewrite the unit testing corresponding to the refactored code, to save energy and time of the developer, and improve efficiency of obtaining the unit testing corresponding to the refactored code and efficiency of software development and maintenance.

To better understand the unit testing generation method and apparatus, and the related device that are provided in this application, the following provides detailed descriptions separately with reference to corresponding accompanying drawings.

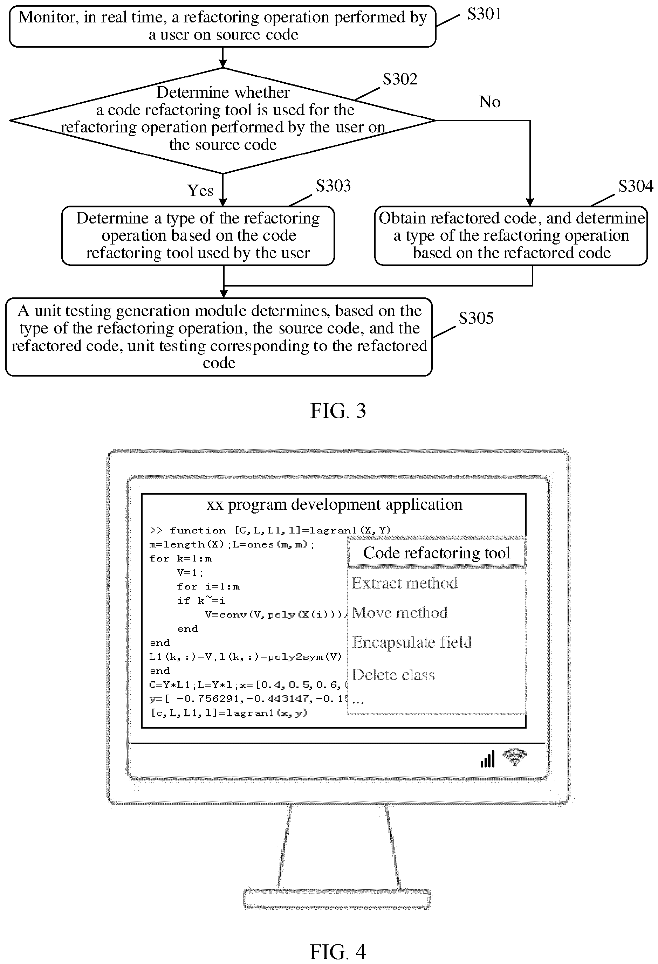

First, the unit testing generation method provided in this application is described with reference to a schematic flowchart shown in FIG. 3. The method may be applied to the terminal device shown in FIG. 1, or may be applied to the software development system shown in FIG. 2. This is not specifically limited herein.

As shown in FIG. 3, the method provided in this application includes the following steps.

S301: Monitor, in real time, a refactoring operation performed by a user on source code.

The source code may be code written by using any programming language (for example, java, C, or C++), the user is the developer described above, and the refactoring operation may be performed by the user through an application that is installed on the terminal device and that has a program development function. When the application that has the program development function has a code refactoring tool (for example, a shortcut key for performing a refactoring operation of an "extract method"), the refactoring operation may be performed by the user by using the code refactoring tool.

During actual application, the refactoring operation performed by the user on the source code may be the extract method, an inline method (inline method), an introduce explaining variable (introduce explaining), a move method, extract class, move field, inline class, replace array with object (replace array with object), a rename method (rename method), or the like. This is not specifically limited herein.

During specific implementation, the source code usually includes a plurality of lines of code, and the refactoring operation performed by the user on the source code may be performed at any location in the plurality of lines of code. In addition, the refactoring operation performed by the user on the source code may be completed by performing only one modification action on the code, or may be completed by performing a plurality of modification actions. This is not specifically limited herein.

S302: Determine whether a code refactoring tool is used for the refactoring operation performed by the user on the source code; and when it is determined that the code refactoring tool is used, perform S303; or when it is determined that the code refactoring tool is not used, perform S304.

Specifically, information that changes the source code and that is introduced by the refactoring operation performed by the user on the source code may be encoded and parsed based on a language server protocol (language server protocol, LSP), to determine whether the code refactoring tool is used for the refactoring operation performed by the user on the source code. The LSP is an open network transmission protocol based on JavaScript object notation (JavaScript object notation, JSON for short), and may enable different code editors and IDEs to conveniently embed various programming languages, and allow developers to use various programming languages to write programs in their favorite code editing tools.

S303: Determine a type of the refactoring operation based on the code refactoring tool used by the user.

Usually, if a refactoring operation is performed on the source code by using a code refactoring tool, code refactoring tools used to perform different refactoring operations (such as the extract method, the inline method, the introduce explaining variable, the move method, and extract class that are listed above) on the source code are different, as shown in FIG. 4. For example, a refactoring operation A is to delete a class a in the source code, and a refactoring operation B is to encapsulate a field b in the source code. When the user performs the refactoring operation A, a code refactoring tool used is a "delete class" tool of an application that has a program development function. When the user performs the refactoring operation B, a code refactoring tool used is an "encapsulate field" tool of an application that has a program development function. Therefore, the type of the refactoring operation may be determined based on the code refactoring tool used by the user.

The code refactoring tool may be various tools such as the "extract method", the "inline method", the "introduce explaining variable", the "move method", "extract class", "move field", "inline class", "replace array with object", "extract class", "extract subclass", "extract superclass", "delete class", and "encapsulate field". In correspondence to the code refactoring tool, the type of the refactoring operation may be various types such as the extract method, the inline method, the introduce explaining variable, the move method, extract class, move field, inline class, replace array with object, extract class, extract subclass, extract superclass, delete class, and encapsulate field.

In a possible embodiment, when it is determined that the code refactoring tool is used for the refactoring operation performed by the user on the source code, S304 may alternatively be performed to determine the type of the refactoring operation.

It should be noted that the refactoring operations listed in S301, and the code refactoring tools and the types of the refactoring operation listed in S303 are merely examples. During specific implementation, another refactoring operation, another code refactoring tool, and another type of refactoring operation also fall within the protection scope of this application. This is not specifically limited in this application.

S304: Obtain refactored code, and determine a type of the refactoring operation based on the refactored code.

The refactored code is code obtained by performing the refactoring operation on the source code by the user.

Usually, different refactored code is generated by performing different refactoring operations on the source code. For example, a refactoring operation A is to delete a class a in the source code, and a refactoring operation B is to encapsulate a field b in the source code. Refactored code A' obtained by performing the refactoring operation A on the source code is compared with refactored code B' obtained by performing the refactoring operation B on the source code. The refactored code A' does not include the class a, while the refactored code B' includes the class a. A field b in the refactored code A' is not encapsulated, while a field b in the refactored code B' is encapsulated. Therefore, the type of the refactoring operation may be determined based on the refactored code.

In a specific embodiment of this application, refer to any one of the following manners to determine, based on the refactored code, the type of the refactoring operation performed by the user on the source code:
Manner 1: Matching is performed between the refactored code and a plurality of first rules included in a first rule library, whether a rule matching the refactored code exists in the first rule library is determined, and when it is determined that the rule matching the refactored code exists, a refactoring operation type corresponding to the matched rule is determined as the type of the refactoring operation performed by the user on the source code.

The first rule library may include a plurality of first rules. The plurality of first rules correspond to a plurality of refactoring operation types. Specifically, a correspondence between the plurality of first rules and the plurality of refactoring operation types may be a one-to-one correspondence. The plurality of refactoring operation types include various refactoring operation types such as the extract method, the inline method, the introduce explaining variable, the move method, extract class, move field, inline class, replace array with object, extract class, extract superclass, delete class, and encapsulate field.

Because of the one-to-one correspondence between the plurality of first rules and the plurality of refactoring operation types, the determining whether a rule matching the refactored code exists in the first rule library may be understood as determining whether a refactoring operation type matching the refactored code exists in the plurality of refactoring operation types. When it is determined that the matching refactoring operation type exists, the refactoring operation type is determined as the type of the refactoring operation performed by the user on the source code. For example, it is assumed that the first rule library includes a rule a, and a refactoring operation type corresponding to the rule a is the move method. When matching is performed between the refactored code and the first rule library, a matched rule is the rule a, and the move method corresponding to the rule a may be determined as the type of the refactoring operation performed by the user on the source code.

During specific implementation, a first matching degree threshold (for example, 100%) may be set. When a rule whose matching degree is 100% with the refactored code exists in the first rule library, it is determined that the rule matching the refactored code exists. When the rule whose matching degree is 100% with the refactored code does not exist in the first rule library, it is determined that the rule matching the refactored code does not exist. Optionally, when a rule whose matching degree with the refactored code is greater than the first matching degree threshold (for example, 90%) exists in the first rule library, it may be determined that the rule matching the refactored code exists in the first rule library; or otherwise, it is determined that the rule matching the refactored code does not exist in the first rule library. If the matched rule exists and there are a plurality of matched rules, a refactoring operation type corresponding to a rule with a maximum matching degree may be determined as the type of the refactoring operation performed by the user on the source code. Optionally, the plurality of matched rules may be sorted based on rule matching degrees, and then the plurality of sorted rules are recommended to the user together. The user selects a rule that meets a testing requirement from the plurality of sorted rules, and finally determines a refactoring operation type corresponding to the rule as the type of the refactoring operation performed by the user on the source code. Optionally, refactoring operation types corresponding to the plurality of matched rules may be sorted based on rule matching degrees, and then the sorted refactoring operation types are recommended to the user together. The user selects a refactoring operation type that meets a testing requirement from the sorted refactoring operation types, and determines the refactoring operation type as the type of the refactoring operation performed by the user on the source code.

During specific implementation, the plurality of first rules and refactoring operation types corresponding to the plurality of first rules are obtained in advance by a dedicated rule designer based on a plurality of application scenarios. In this way, when the rule matching the refactored code exists in the first rule library, a refactoring operation type corresponding to the rule matching the refactored code is determined as the type of the refactoring operation performed by the user on the source code, so that accuracy of the determined type of the refactoring operation can be ensured. In addition, it can be learned that the foregoing embodiment provides a plurality of manners of determining the type of the refactoring operation performed by the user on the source code, so that flexibility is high, and user experience can be improved.

Manner 2: The refactored code is input into a refactoring operation identification model for identification, to determine the type of the refactoring operation performed by the user on the source code.

During specific implementation, after the refactored code is input into the refactoring operation identification model, the refactoring operation identification model may obtain a plurality of refactoring operation types and confidence of the plurality of refactoring operation types. The refactoring operation identification model may directly use an operation type with maximum confidence in the plurality of refactoring operation types as the type of the refactoring operation performed by the user on the source code for output. Optionally, the refactoring operation identification model may sort, based on confidence, a part of refactoring operation types whose confidence is greater than a confidence threshold in the plurality of refactoring operation types for output, and recommend the sorted refactoring operation types to the user. Subsequently, the user may select, from the part of refactoring operation types, a refactoring operation type that meets a testing requirement as the type of the refactoring operation performed by the user on the source code.

In a specific embodiment of this application, the refactoring operation identification model may be expressed as:

$$y_1 = f_1(x_1)$$

$y_1$ is the type of the refactoring operation performed by the user on the source code, $x_1$ is the refactored code, $f_1()$ is a mapping relationship between the refactored code and the type of the refactoring operation, and fiU may be obtained through training by using a first sample set including a large quantity of known refactored code. The large quantity of known refactored code in the first sample set may be obtained by the user by separately performing a refactoring operation on a large quantity of known source code. Optionally, the large quantity of known refactored code in the first sample set may alternatively be obtained from the Internet. This is not specifically limited herein.

During specific implementation, the refactoring operation identification model may be a model implemented by using a CNN, or may be a model implemented by using an RNN. This is not specifically limited herein. The convolutional neural network may be a VGGNet, a ResNET, an FPNet, or the like. The recurrent neural network may be a long short-term memory (long short-term memory, LSTM) model, a bidirectional long short-term memory (Bidirectional long short-term memory, BiLSTM) model, or the like. This is not specifically limited herein. Optionally, a neural network may alternatively be a random forest, a support vector machine, or the like.

S3 05: A unit testing generation module determines, based on the type of the refactoring operation, the source code, and the refactored code, unit testing corresponding to the refactored code.

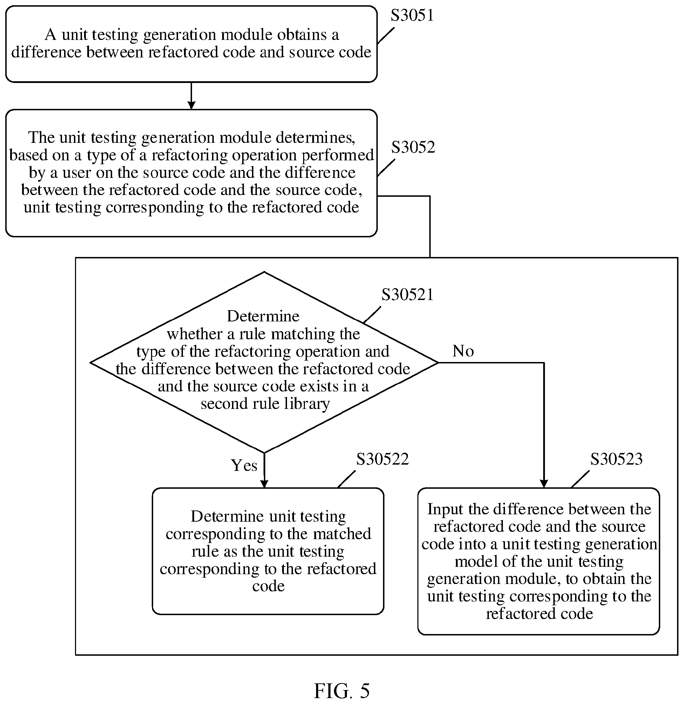

In a specific embodiment of this application, a specific process in which the unit testing corresponding to the refactored code is determined by the unit testing generation module based on the type of the refactoring operation performed by the user on the source code, the source code, and the refactored code may include the following steps, as shown in FIG. 5.

S3051: The unit testing generation module obtains a difference between the refactored code and the source code.

During specific implementation, the difference between the refactored code and the source code may be specifically obtained by analyzing a difference between an abstract syntax tree (abstract syntax tree, AST) corresponding to the refactored code and an AST corresponding to the source code. The AST is a tree representation form of an abstract syntax structure of code, and each node in the tree represents a structure in the source code.

S3052: The unit testing generation module determines, based on the type of the refactoring operation performed by the user on the source code and the difference between the refactored code and the source code, the unit testing corresponding to the refactored code.

In a specific embodiment of this application, step S3052 may be specifically implemented through the following step S30521 to step S30523.

S30521: Determine whether a rule matching the type of the refactoring operation and the difference between the refactored code and the source code exists in a second rule library; and when it is determined that the matched rule exists, perform S30522; or when it is determined that the matched rule does not exist, perform S30523.

S30522: Determine unit testing corresponding to the matched rule as the unit testing corresponding to the refactored code.

The second rule library may include a plurality of second rules, the plurality of second rules correspond to a plurality of types of unit testing, and the plurality of types of unit testing are used to test different code. Specifically, a correspondence between the plurality of second rules and the plurality of types of unit testing may be a one-to-one correspondence.

Because of the one-to-one correspondence between the plurality of second rules and the plurality of types of unit testing, the determining whether a rule matching the type of the refactoring operation and the difference between the refactored code and the source code exists in a second rule library may be understood as determining whether unit testing matching the type of the refactoring operation and the difference between the refactored code and the source code exists in the second rule library. When it is determined that the matching unit testing exists, the unit testing is determined as the unit testing corresponding to the refactored code. For example, it is assumed that the second rule library includes a rule b, and unit testing corresponding to the rule b is unit testing b'. When matching is performed between the refactored code and the second rule library, a matched rule is the rule b, and the unit testing b' corresponding to the rule b may be determined as the unit testing corresponding to the refactored code.

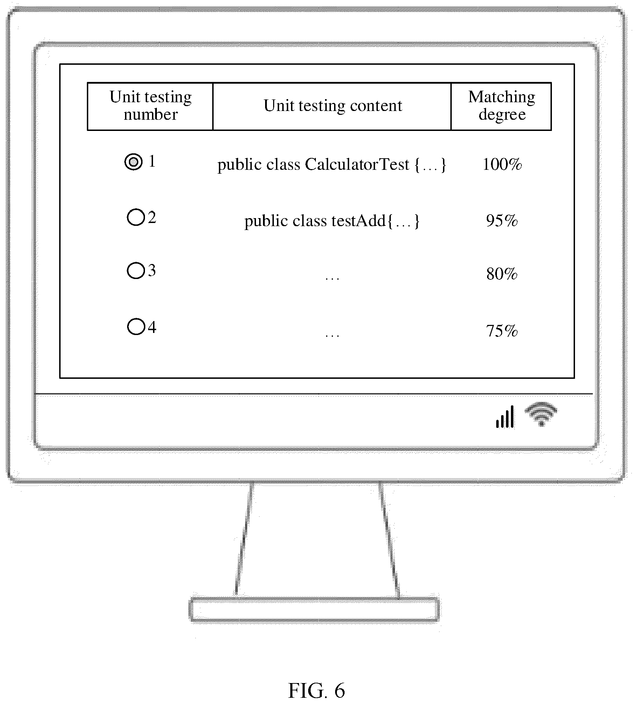

During specific implementation, a second matching degree threshold (for example, 100%) may be set. When a rule whose matching degree is 100% with the type of the refactoring operation and the difference between the refactored code and the source code exists in the second rule library, it is determined that the rule matching the type of the refactoring operation and the difference between the refactored code and the source code exists. When the rule whose matching degree is 100% with the type of the refactoring operation and the difference between the refactored code and the source code does not exist in the second rule library, it is determined that the matched rule does not exist. Optionally, when a rule whose matching degree with the type of the refactoring operation and the difference between the refactored code and the source code is greater than the second matching degree threshold (for example, 90%) exists in the second rule library, it may be determined that the matched rule exists in the second rule library; or otherwise, it is determined that the matched rule does not exist in the second rule library. If the matched rule exists and there are a plurality of matched rules, unit testing corresponding to a rule with a maximum matching degree may be determined as the unit testing corresponding to the refactored code. Optionally, the plurality of matched rules may be sorted based on rule matching degrees, and then the plurality of sorted rules are recommended to the user together. The user selects a rule that meets a testing requirement from the plurality of sorted rules, and finally determines unit testing corresponding to the rule as the unit testing corresponding to the refactored code. Optionally, unit testing corresponding to the plurality of matched rules may be sorted based on rule matching degrees, and then the sorted unit testing is recommended to the user together. As shown in FIG. 6, the user selects unit testing that meets a testing requirement from the sorted unit testing, and determines the unit testing as the unit testing corresponding to the refactored code.

During specific implementation, the plurality of second rules and unit testing corresponding to the plurality of second rules are obtained in advance by a dedicated rule designer based on a plurality of application scenarios. In this way, when the rule matching the type of the refactoring operation and the difference between the refactored code and the source code exists in the second rule library, unit testing corresponding to the rule matching the type of the refactoring operation and the difference between the refactored code and the source code is determined as the unit testing corresponding to the refactored code, so that accuracy of the determined unit testing corresponding to the refactored code can be ensured. In addition, it can be learned that the foregoing embodiment provides a plurality of manners of determining the unit testing corresponding to the refactored code, so that flexibility is high, and user experience can be improved.

S30523: Input the difference between the refactored code and the source code into a unit testing generation model of the unit testing generation module, to obtain the unit testing corresponding to the refactored code.

During specific implementation, after the difference between the refactored code and the source code is input into the unit testing generation model, the unit testing generation model may obtain a plurality of types of unit testing and confidence of the plurality of types of unit testing. The unit testing generation model may directly use unit testing with maximum confidence in the plurality of types of unit testing as the unit testing corresponding to the refactored code to output. Optionally, the unit testing generation model may sort, based on confidence, a part of unit testing whose confidence is greater than a confidence threshold in the plurality of types of unit testing for output, and recommend the sorted unit testing to the user. Subsequently, the user may select, from the part of unit testing, unit testing that meets a testing requirement as the unit testing corresponding to the refactored code.

In a specific embodiment of this application, the unit testing generation model may be expressed as:

$$y_2 = f_2(x_2)$$

$y_2$ is the unit testing corresponding to the refactored code, $x_2$ is the difference between the refactored code and the source code, $f_2()$ is a mapping relationship between the difference between the refactored code and the source code and the unit testing corresponding to the refactored code, and $f_2()$ may be obtained through training by using a second sample set including differences between a large quantity of known refactored code and a large quantity of known source code. The difference between each piece of known refactored code and known source code corresponding to the known refactored code in the second sample set may be obtained by the user by analyzing, after the user obtains the known refactored code by performing a refactoring operation on the known source code, the known refactored code and the known source code. Optionally, the difference between each piece of known refactored code and known source code corresponding to the known refactored code in the second sample set may alternatively be obtained from the Internet. This is not specifically limited herein.

During specific implementation, the unit testing generation model may be a model implemented by using a CNN, or may be a model implemented by using an RNN. This is not specifically limited herein. The convolutional neural network may be a VGGNet, a ResNET, an FPNet, or the like. The recurrent neural network may be an LSTM model, a BiLSTM model, or the like. This is not specifically limited herein. Optionally, a neural network may alternatively be a random forest, a support vector machine, or the like.

During specific implementation, a manner of using the first sample set for training to obtain the refactoring operation identification model and using the second sample set for training to obtain the unit testing generation model may be supervised training, or may be unsupervised training. This is not specifically limited herein.

For example, the second sample set is used to perform supervised training to obtain the unit testing generation model. When the training manner is the supervised training, the second sample set may further include known unit testing corresponding to a large quantity of known code differences (that is, the differences between the large quantity of known refactored code and the large quantity of known source code). Specifically, the large quantity of known code differences may be sequentially used as input of an untrained neural network, the known unit testing corresponding to the code differences is used as a reference for output values of the untrained neural network, loss values between the output values of the untrained neural network and the known unit testing are calculated by using a loss function, and then a parameter in the untrained neural network is adjusted based on the loss values. During specific implementation, the large quantity of known code differences and the known unit testing corresponding to the known code differences may be used to iteratively train the untrained neural network, and the parameter in the untrained neural network is continuously adjusted, until the neural network can accurately output, based on the difference between the input refactored code and the source code, an output value that is the same as the known unit testing corresponding to the difference, to obtain a trained unit testing generation model.

It should be noted that, in the foregoing embodiment, the unit testing generation module performs S30522 when determining that the rule matching the type of the refactoring operation and the difference between the refactored code and the source code exists in the second rule library, and performs S30523 when determining that the matched rule does not exist. However, during specific implementation, when determining that the rule matching the type of the refactoring operation and the difference between the refactored code and the source code exists in the second rule library, the unit testing generation module may perform S30523 while performing S30522. Then the obtained unit testing corresponding to the matched rule and unit testing generated by the unit testing generation model are recommended to the user together. The user selects unit testing that meets a testing requirement from the obtained unit testing corresponding to the matched rule and the unit testing generated by the unit testing generation model as the unit testing corresponding to the refactored code. Optionally, after obtaining the difference between the refactored code and the source code, the unit testing generation module may directly perform S30523, to determine unit testing generated by the unit testing generation model as the unit testing corresponding to the refactored code.

In a specific embodiment of this application, before S301 is performed, the terminal device shown in FIG. 1 or the software development system shown in FIG. 2 may receive a time range entered by the user. The time range is a time range in which the user performs the refactoring operation on the source code, and is also a time range in which the user expects the terminal device shown in FIG. 1 or the software development system shown in FIG. 2 to monitor the refactoring operation performed by the user. In this way, the terminal device shown in FIG. 1 or the software development system shown in FIG. 2 can monitor only a refactoring operation performed by the user on the source code within the time range, and generate corresponding unit testing based on the refactoring operation within the time range, and does not monitor a refactoring operation performed by the user on the source code outside the time range. This not only can optimize user experience, but also can save computing resources.

In conclusion, according to the method provided in this application, when the user performs the refactoring operation on the source code, the refactoring operation performed by the user on the source code may be monitored in real time, and the type of the refactoring operation performed by the user on the source code may be determined. Then the unit testing corresponding to the refactored code can be determined by the unit testing generation module based on the type of the refactoring operation, the source code, and the refactored code. The user does not need to manually modify unit testing corresponding to the source code to obtain the unit testing corresponding to the refactored code, or rewrite the unit testing corresponding to the refactored code, to save energy and time of a developer, and improve efficiency of obtaining the unit testing corresponding to the refactored code and efficiency of software development and maintenance.

The foregoing describes in detail the unit testing generation method provided in this application. To better implement the foregoing solutions provided in this application, correspondingly, the following further provides a unit testing generation apparatus and a related device that are configured to cooperate in implementing the foregoing solutions.

The unit testing generation apparatus provided in this application may be used in the terminal device shown in FIG. 1, or may be used in the software development system shown in FIG. 2. When being used in the software development system shown in FIG. 2, the unit testing generation apparatus may be used in the server 300 shown in FIG. 2. It should be understood that unit modules in the unit testing generation apparatus may also be divided in a plurality of manners. The modules may be software modules or may be hardware modules, or a part of the modules may be software modules and the other part of the modules may be hardware modules. This is not limited in this application. When the unit testing generation apparatus is used in the server 300 shown in FIG. 2, and the unit testing generation apparatus includes a plurality of unit modules, the modules in the plurality of unit modules may be deployed on a same server, or may be deployed on different servers. This is not specifically limited in this application.

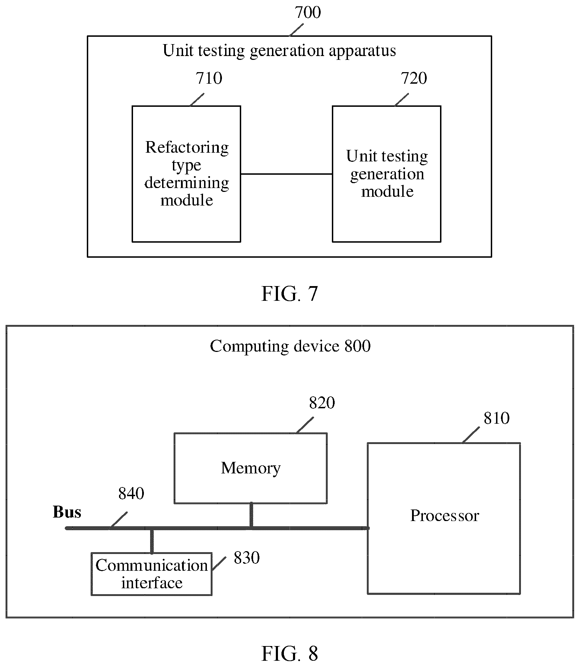

FIG. 7 is a schematic diagram of a structure of a unit testing generation apparatus 700 shown as an example according to this application. The apparatus 700 includes a refactoring type determining module 710 and a unit testing generation module 720.

The refactoring type determining module 710 is configured to determine a type of a refactoring operation performed by a user on source code.

The unit testing generation module 720 is configured to determine, based on the type of the refactoring operation, the source code, and refactored code, unit testing corresponding to the refactored code, where the refactored code is code obtained by performing the refactoring operation on the source code by the user, and the unit testing corresponding to the refactored code is used to test the refactored code.

In a possible implementation, the refactoring type determining module 710 may specifically determine, in the following manner, the type of the refactoring operation performed by the user on the source code: determining whether a code refactoring tool for the refactoring operation performed by the user on the source code; and if it is determined that the code refactoring tool is used, determining the type of the refactoring operation based on the code refactoring tool; or if it is determined that the code refactoring tool is not used, determining the type of the refactoring operation based on the refactored code.

In a possible implementation, the refactoring type determining module 710 may specifically determine the type of the refactoring operation based on the refactored code in the following manner: first, obtaining the refactored code; then determining whether a rule matching the refactored code exists in a first rule library; and if it is determined that the rule matching the refactored code exists, using a refactoring operation type corresponding to the matched rule as the type of the refactoring operation.

In a possible implementation, the refactoring type determining module 710 may specifically determine the type of the refactoring operation based on the refactored code in the following manner: first, obtaining the refactored code; and then inputting the refactored code into a refactoring operation identification model for identification, to obtain the type of the refactoring operation.

In a possible implementation, the unit testing generation module 720 may specifically determine, based on the type of the refactoring operation, the source code, and the refactored code, the unit testing corresponding to the refactored code in the following manner: first, obtaining a difference between the refactored code and the source code; and then determining, based on the type of the refactoring operation and the difference between the refactored code and the source code, the unit testing corresponding to the refactored code.

In a possible implementation, the unit testing generation module 720 may specifically determine, based on the type of the refactoring operation and the difference between the refactored code and the source code, the unit testing corresponding to the refactored code in the following manner: determining whether a rule matching the type of the refactoring operation and the difference between the refactored code and the source code exists in a second rule library; and if it is determined that the rule matching the type of the refactoring operation and the difference between the refactored code and the source code exists, using unit testing corresponding to the matched rule as the unit testing corresponding to the refactored code.

In a possible implementation, the unit testing generation module 720 is further configured to: if it is determined that the rule matching the type of the refactoring operation and the difference between the refactored code and the source code does not exist, input the difference between the refactored code and the source code into a unit testing generation model, to obtain the unit testing corresponding to the refactored code.

Specifically, for specific implementations of performing various operations by the unit testing generation apparatus 700, refer to descriptions in related content in the foregoing unit testing generation method embodiments. For brevity of the specification, details are not described herein again.

In conclusion, the unit testing generation apparatus (the apparatus 700 shown in FIG. 7) provided in this application can determine the type of the refactoring operation performed by the user on the source code. Then the unit testing corresponding to the refactored code is determined by the unit testing generation module 720 based on the type of the refactoring operation, the source code, and the refactored code. The user does not need to manually modify unit testing corresponding to the source code to obtain the unit testing corresponding to the refactored code, or rewrite the unit testing corresponding to the refactored code, to save energy and time of a developer, and improve efficiency of obtaining the unit testing corresponding to the refactored code and efficiency of software development and maintenance.

FIG. 8 is a schematic diagram of a structure of a computing device 800 according to this application. The computing device 800 includes a processor 810, a memory 820, and a communication interface 830. The processor 810, the memory 820, and the communication interface 830 may be connected to each other through a bus 840.

The processor 810 may read program code (including instructions) stored in the memory 820, and execute the program code stored in the memory 820, to enable the computing device 800 to perform the steps in the unit testing generation method provided in the foregoing method embodiments, or enable the computing device 800 to deploy the unit testing generation apparatus 700.

The processor 810 may be implemented in a plurality of specific forms, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), generic array logic (generic array logic, GAL), or any combination thereof. The processor 810 executes various types of digital storage instructions, for example, software or firmware programs stored in the memory 820, to enable the computing device 800 to provide various services.

The memory 820 is configured to store program code, and the processor 810 controls execution of the program code, to perform the processing steps in any one of the embodiments in FIG. 3 and FIG. 5. The program code may include one or more software modules. The one or more software modules may be the software modules provided in the embodiment in FIG. 7, for example, the refactoring type determining module 710 and the unit testing generation module 720.

The memory 820 may include a volatile memory (volatile memory), for example, a random access memory (random access memory, RAM). The memory 820 may also include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 820 may further include a combination of the foregoing types.

The communication interface 830 may be a wired interface (for example, an Ethernet interface, an optical fiber interface, or an interface of another type (for example, an infiniBand interface)) or a wireless interface (for example, a cellular network interface or a wireless local area network interface), and is configured to communicate with another computing device or apparatus. The communication interface 830 may use a protocol suite above a transmission control protocol/internet protocol (transmission control protocol/internet protocol, TCP/IP), for example, a remote function call (remote function call, RFC) protocol, a simple object access protocol (simple object access protocol, SOAP), a simple network management protocol (simple network management protocol, SNMP), a common object request broker architecture (common object request broker architecture, CORBA) protocol, and a distributed protocol.

The bus 840 may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL) bus, a cache coherent interconnect for accelerators (cache coherent interconnect for accelerators, CCIX) bus, or the like. The bus 840 may be classified into an address bus, a data bus, a control bus, and the like. In addition to a data bus, the bus 840 may further include a power bus, a control bus, a status signal bus, and the like. However, for clear description, various types of buses in the figure are marked as the bus 840. For ease of representation, only one thick line is for representing the bus in FIG. 8, but this does not mean that there is only one bus or only one type of bus.

The computing device 800 is configured to perform the method performed in the foregoing unit testing generation method embodiments, and belongs to a same concept as the foregoing method embodiments. For a specific implementation process, refer to the foregoing method embodiments. Details are not described herein again.

It should be understood that the computing device 800 is merely an example provided in embodiments of this application. In addition, the computing device 800 may have more or fewer components than those shown in FIG. 8, may combine two or more components, or may have different component configurations.

This application further provides a computer-readable storage medium. The computer-readable storage medium stores instructions. When the instructions are run, a part or all of the steps of the unit testing generation method recorded in the foregoing embodiments may be implemented.

This application further provides a computer program product. When the computer program product is read and executed by a computer, a part or all of the steps of the unit testing generation method recorded in the foregoing method embodiments may be implemented.

In the foregoing embodiments, the descriptions of the embodiments have respective focuses. For a part that is not described in detail in an embodiment, refer to related descriptions in other embodiments.

All or a part of the foregoing embodiments may be implemented by using software, hardware, or any combination thereof. When the software is used to implement the embodiments, all or a part of embodiments may be implemented in a form of a computer program product. The computer program product includes one or more computer instructions. When the computer program instructions are loaded and executed on the computer, all or a part of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium, a semiconductor medium, or the like.

The foregoing descriptions are merely specific implementations of this application. Any variation or replacement readily figured out by a person skilled in the art based on the specific implementations provided in this application shall fall within the protection scope of this application.

**Claims**

1. A unit testing generation method, wherein the method comprises:

determining a type of a refactoring operation performed by a user on source code; and
determining, by a unit testing generation module based on the type of the refactoring operation, the source code, and refactored code, unit testing corresponding to the refactored code, wherein the refactored code is code obtained by performing the refactoring operation on the source code by the user, and the unit testing corresponding to the refactored code is used to test the refactored code.

2. The method according to claim 1, wherein the determining a type of a refactoring operation performed by a user on source code comprises:

determining whether a code refactoring tool is used for the refactoring operation performed by the user on the source code; and
if it is determined that the code refactoring tool is used, determining the type of the refactoring operation based on the code refactoring tool; or
if it is determined that the code refactoring tool is not used, determining the type of the refactoring operation based on the refactored code.

3. The method according to claim 2, wherein the determining the type of the refactoring operation based on the refactored code comprises:

obtaining the refactored code;
determining whether a rule matching the refactored code exists in a first rule library; and
if it is determined that the rule matching the refactored code exists, using a refactoring operation type corresponding to the matched rule as the type of the refactoring operation.

4. The method according to claim 2, wherein the determining the type of the refactoring operation based on the refactored code comprises:

obtaining the refactored code; and
inputting the refactored code into a refactoring operation identification model for identification, to obtain the type of the refactoring operation.

5. The method according to any one of claims 1 to 4, wherein the determining, by a unit testing generation module based on the type of the refactoring operation, the source code, and refactored code, unit testing corresponding to the refactored code comprises:

obtaining, by the unit testing generation module, a difference between the refactored code and the source code; and
determining, by the unit testing generation module based on the type of the refactoring operation and the difference between the refactored code and the source code, the unit testing corresponding to the refactored code.

6. The method according to claim 5, wherein the generating, by the unit testing generation module based on the type of the refactoring operation and the difference between the refactored code and the source code, the unit testing corresponding to the refactored code comprises:

   determining, by the unit testing generation module, whether a rule matching the type of the refactoring operation and the difference between the refactored code and the source code exists in a second rule library; and
   if the unit testing generation module determines that the rule matching the type of the refactoring operation and the difference between the refactored code and the source code exists, using unit testing corresponding to the matched rule as the unit testing corresponding to the refactored code.

7. The method according to claim 6, wherein if the unit testing generation module determines that the rule matching the type of the refactoring operation and the difference between the refactored code and the source code does not exist, the unit testing generation module inputs the difference between the refactored code and the source code into a unit testing generation model, to obtain the unit testing corresponding to the refactored code.

8. A unit testing generation apparatus, wherein the apparatus comprises:

   a refactoring type determining module, configured to determine a type of a refactoring operation performed by a user on source code; and
   a unit testing generation module, configured to determine, based on the type of the refactoring operation, the source code, and refactored code, unit testing corresponding to the refactored code, wherein the refactored code is code obtained by performing the refactoring operation on the source code by the user, and the unit testing corresponding to the refactored code is used to test the refactored code.

9. The apparatus according to claim 8, wherein the refactoring type determining module is specifically configured to:

   determine whether a code refactoring tool is used for the refactoring operation performed by the user on the source code; and
   if it is determined that the code refactoring tool is used, determine the type of the refactoring operation based on the code refactoring tool; or
   if it is determined that the code refactoring tool is not used, determine the type of the refactoring operation based on the refactored code.

10. The apparatus according to claim 9, wherein the refactoring type determining module is specifically configured to:

    obtain the refactored code;
    determine whether a rule matching the refactored code exists in a first rule library; and
    if it is determined that the rule matching the refactored code exists, use a refactoring operation type corresponding to the matched rule as the type of the refactoring operation.

11. The apparatus according to claim 9, wherein the refactoring type determining module is specifically configured to:

    obtain the refactored code; and
    input the refactored code into a refactoring operation identification model for identification, to obtain the type of the refactoring operation.

12. The apparatus according to any one of claims 8 to 11, wherein the unit testing generation module is specifically configured to:

    obtain a difference between the refactored code and the source code; and
    determine, based on the type of the refactoring operation and the difference between the refactored code and the source code, the unit testing corresponding to the refactored code.

13. The apparatus according to claim 12, wherein the unit testing generation module is specifically configured to:

    determine whether a rule matching the type of the refactoring operation and the difference between the refactored code and the source code exists in a second rule library; and
    if it is determined that the rule matching the type of the refactoring operation and the difference between the refactored code and the source code exists, use unit testing corresponding to the matched rule as the unit testing corresponding to the refactored code.

14. The apparatus according to claim 13, wherein the unit testing generation module is further configured to:
    if it is determined that the rule matching the type of the refactoring operation and the difference between the refactored code and the source code does not exist, input the difference between the refactored code and the source code into a unit testing generation model, to obtain the unit testing corresponding to the refactored code.

15. A computing device, wherein the computing device comprises a processor and a memory, and the processor is configured to execute instructions stored in the memory, to enable the computing device to implement the method according to any one of claims 1 to 7.

16. A computer-readable storage medium, wherein the computer-readable storage medium stores instructions, and the instructions are used to implement the method according to any one of claims 1 to 7.

FIG. 1

Software source code | Testing file

Source code 1 | Unit testing 1

Source code 2 | Unit testing 2

⋮ | ⋮

Source code n | Unit testing n

Before refactoring

Software source code | Testing file

Refactored code 1 | Unit testing 1

Refactored code 2 | Unit testing 2

⋮ | ⋮

Refactored code n | Unit testing n

After refactoring

Code testing service node

Code testing service node

Code testing service node

Code testing server application

Virtualization service

Testing service hardware

Code testing server application

Virtualization service

Testing service hardware

Code testing server application

Virtualization service

Testing service hardware

300

200

200

Network device

100

100

Terminal device

Examples

Terminal device

Examples

Correspondence

FIG. 2

Monitor, in real time, a refactoring operation performed by a user on source code — S301

Determine whether a code refactoring tool is used for the refactoring operation performed by the user on the source code — S302

No

Yes — S303

Determine a type of the refactoring operation based on the code refactoring tool used by the user

Obtain refactored code, and determine a type of the refactoring operation based on the refactored code — S304

A unit testing generation module determines, based on the type of the refactoring operation, the source code, and the refactored code, unit testing corresponding to the refactored code — S305

FIG. 3

xx program development application

```
>> function [C,L,L1,l]=lagran1(X,Y)
m=length(X);L=ones(m,m);
for k=1:m
    V=1;
    for i=1:m
    if k~=i
        V=conv(V,poly(X(i)));
    end
end
L1(k,:)=V;l(k,:)=poly2sym(V)
end
C=Y*L1;L=Y*1;x=[0.4,0.5,0.6,
y=[ -0.756291,-0.443147,-0.1
[c,L,L1,l]=lagran1(x,y)
```

Code refactoring tool

Extract method

Move method

Encapsulate field

Delete class

...

FIG. 4

A unit testing generation module obtains a difference between refactored code and source code — S3051

The unit testing generation module determines, based on a type of a refactoring operation performed by a user on the source code and the difference between the refactored code and the source code, unit testing corresponding to the refactored code — S3052

Determine whether a rule matching the type of the refactoring operation and the difference between the refactored code and the source code exists in a second rule library — S30521

No

Yes

Determine unit testing corresponding to the matched rule as the unit testing corresponding to the refactored code — S30522

Input the difference between the refactored code and the source code into a unit testing generation model of the unit testing generation module, to obtain the unit testing corresponding to the refactored code — S30523

FIG. 5

| Unit testing number | Unit testing content | Matching degree |
|---|---|---|
| ◎ 1 | public class CalculatorTest {…} | 100% |
| ○ 2 | public class testAdd{…} | 95% |
| ○ 3 | … | 80% |
| ○ 4 | … | 75% |

FIG. 6

700

**Unit testing generation apparatus**

710

**Refactoring type determining module**

720

**Unit testing generation module**

FIG. 7

**Computing device 800**

820

**Memory**

810

840

**Bus**

**Processor**

**Communication interface**

830

FIG. 8

## INTERNATIONAL SEARCH REPORT

| International application No. |
| --- |
| **PCT/CN2022/130675** |

| | |
| --- | --- |
| **A.** | **CLASSIFICATION OF SUBJECT MATTER** |

G06F 11/36(2006.01)i

According to International Patent Classification (IPC) or to both national classification and IPC

| | |
| --- | --- |
| **B.** | **FIELDS SEARCHED** |

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 单元测试, 源代码, 代码重构, 类型, 模型, 规则库, unit testing, source code, code refactoring, type, model, rule library

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 113641573 A (ANHUI ZHONGKE GUOCHUANG HIGH TRUSTED SOFTWARE CO., LTD.) 12 November 2021 (2021-11-12) description, paragraphs [0009]-[0043] | 1-2, 8-9, 15-16 |
| Y | CN 113641573 A (ANHUI ZHONGKE GUOCHUANG HIGH TRUSTED SOFTWARE CO., LTD.) 12 November 2021 (2021-11-12) description, paragraphs [0009]-[0043] | 3-7, 10-14 |
| Y | CN 104731587 A (YONYOU NETWORK TECHNOLOGY CO., LTD.) 24 June 2015 (2015-06-24) description, paragraphs [0059]-[0072] | 3-7, 10-14 |
| A | CN 107341110 A (INSPUR SOFTWARE GROUP CO., LTD.) 10 November 2017 (2017-11-10) entire document | 1-16 |
| A | CN 113672512 A (TAIKANG INSURANCE GROUP CO., LTD. et al.) 19 November 2021 (2021-11-19) entire document | 1-16 |
| A | US 2006123394 A1 (NICKELL, Eric Stephen et al.) 08 June 2006 (2006-06-08) entire document | 1-16 |

☐ Further documents are listed in the continuation of Box C.    ☑ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **13 January 2023** | **28 January 2023** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

| | International application No. |
|---|---|
| | **PCT/CN2022/130675** |

| Patent document cited in search report | | | Publication date (day/month/year) | Patent family member(s) | Publication date (day/month/year) |
|---|---|---|---|---|---|
| CN | 113641573 | A | 12 November 2021 | None | |
| CN | 104731587 | A | 24 June 2015 | None | |
| CN | 107341110 | A | 10 November 2017 | None | |
| CN | 113672512 | A | 19 November 2021 | None | |
| US | 2006123394 | A1 | 08 June 2006 | None | |

Form PCT/ISA/210 (patent family annex) (January 2015)

**EP 4 432 095 A1**